(19)

**Europäisches Patentamt**

**European Patent Office**

**Office européen des brevets**

(11) **EP 4 220 525 A1**

(12) **EUROPEAN PATENT APPLICATION**

(43) Date of publication:
**02.08.2023 Bulletin 2023/31**

(21) Application number: **23150777.3**

(22) Date of filing: **09.01.2023**

(51) International Patent Classification (IPC):
*G06Q 30/0201* (2023.01)      *G06Q 30/06* (2023.01)

(52) Cooperative Patent Classification (CPC):
**G06Q 30/06; G06Q 30/0206**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.01.2022 US 202217587720**

(71) Applicant: **Mitel Networks Corporation Kanata, ON K2K 3K1 (CA)**

(72) Inventors:
• **Braganza, Jonathan**
  **Ottawa, K2E 6P2 (CA)**
• **Lee, Kevin**
  **Kanata, K2K 2L4 (CA)**
• **Naidoo, Logendra**
  **Ottawa, K1S 0W8 (CA)**

(74) Representative: **McDougall, James et al Venner Shipley LLP 200 Aldersgate London EC1A 4HD (GB)**

(54) **METHOD OF DETERMINING A VALUE OF A NON-FUNGIBLE TOKEN IN A COMPUTING SYSTEM**

(57) The technology described herein determines a clout value for a creator of a digital collectible, determines a popularity value of the digital collectible, and aggregates the clout value and the popularity value into an aggregated value for the digital collectible, normalizes the aggregated value and assigns the normalized aggregated value as an assessed value for the digital collectible. The digital collectible may then be converted into a non-fungible token (NFT) having the assessed value.

**Description**

FIELD OF THE DISCLOSURE

This disclosure relates generally to non-fungible tokens (NFTs) in a computing system, and more particularly, to determining a value of a NFT in a computing system.

BACKGROUND

A non-fungible token (NFT) is a unique and non-interchangeable unit of data stored on a blockchain (a form of digital ledger), which can be sold or traded on digital markets. NFTs can be associated with reproducible digital files such as artwork, photographs, videos, audio clips, music, games, and documents, and a license to use these assets for a specified purpose. NFTs use a digital ledger to provide a public certificate of authenticity or proof of ownership, but do not restrict the sharing or copying of the underlying digital files. The lack of interchangeability (fungibility) distinguishes NFTs from blockchain cryptocurrencies, such as Bitcoin.
Currently, the value of an NFT is determined subjectively and speculatively.

SUMMARY

A first aspect of this specification provides an apparatus comprising:
a clout analyzer to determine a clout value for a creator of a digital collectible; a popularity analyzer to determine a popularity value of the digital collectible; and a valuator to aggregate the clout value and the popularity value into an aggregated value for the digital collectible, to normalize the aggregated value and assign the normalized aggregated value as an assessed value for the digital collectible.
The apparatus may comprise a converter to convert the digital collectible into a non-fungible token (NFT) having the assessed value.
The apparatus may comprise an exclusivity analyzer to determine an exclusivity value for the digital collectible, wherein the valuator is to aggregate the exclusivity value with the clout value and the popularity value.
The exclusivity value may be a number of copies of a non-fungible token (NFT) to be generated from the digital collectible.
The clout value may comprise an aggregate measurement of a plurality of factors contributing to influence of the creator, the plurality of factors including a number of social media followers of the creator.
A second aspect of this specification provides a method comprising: determining a clout value for a creator of a digital collectible; determining a popularity value of the digital collectible; and aggregating the clout value and the popularity value into an aggregated value for the digital collectible, normalizing the aggregated value and assigning the normalized aggregated value as an assessed value for the digital collectible.
The method may comprise converting the digital collectible into a non-fungible token (NFT) having the assessed value.
The method may comprise determining an exclusivity value for the digital collectible and aggregating the exclusivity value with the clout value and the popularity value.
The exclusivity value may be a number of copies of a non-fungible token (NFT) to be generated from the digital collectible.
The clout value may comprise an aggregate measurement of a plurality of factors contributing to influence of the creator, the plurality of factors including a number of social media followers of the creator.
The clout value may change over time based on at least one of social media activity of the creator and others who interact with the creator.
The popularity value may comprise an aggregate measurement of a plurality of factors contributing to popularity of digital collectible, the plurality of factors including a number of social media likes of the digital collectible.
The method may further comprise aggregating an experience value of the creator with the clout value and the popularity value.
The method may further comprise applying one or more scoring weights to one or more of the clout value and the popularity value before aggregating the clout value and the popularity value.
The method may further comprise adjusting one or more of the scoring weights based at least in part on one or more current events.
A third aspect of this specification provides at least one non-transitory machine-readable storage medium comprising instructions that, when executed, cause at least one processing device to at least: determine a clout value for a creator of a digital collectible; determine a popularity value of the digital collectible; and aggregate the clout value and the popularity value into an aggregated value for the digital collectible, to normalize the aggregated value and assign the normalized aggregated value as an assessed value for the digital collectible.

The instructions may further cause the at least one processing device to convert the digital collectible into a non-fungible token (NFT) having the assessed value.

The instructions may further cause the at least one processing device to determine an exclusivity value for the digital collectible and to aggregate the exclusivity value with the clout value and the popularity value.

The instructions may further cause the at least one processing device to aggregate an experience value of the creator with the clout value and the popularity value.

The instructions may further cause the at least one processing device to apply one or more scoring weights to one or more of the clout value and the popularity value before aggregating the clout value and the popularity value.

BRIEF DESCRIPTION OF THE DRAWINGS

Figure 1 is a diagram of computing system for determining a value of an NFT according to some embodiments.
Figure 2 is a diagram of a digital collectible assessor according to some embodiments.
Figure 3 is a flow diagram of NFT valuation processing according to some embodiments.
Figure 4 is a block diagram of an example processor platform structured to execute and/or instantiate the machine-readable instructions and/or operations of Figures 2 and 3 to implement the apparatus discussed with reference to Figure 1.
Figure 5 is a block diagram of an example implementation of the processor circuitry of Figure 4.
Figure 6 is a block diagram of another example implementation of the processor circuitry of Figure 4.
Figure 7 is a block diagram illustrating an example software distribution platform to distribute software such as the machine-readable instructions and/or operations of Figures 2 and 3 to hardware devices owned and/or operated by third parties.

The figures are not to scale. In general, the same reference numbers will be used throughout the drawing(s) and accompanying written description to refer to the same or like parts.

DETAILED DESCRIPTION

Implementations of the technology described herein provide a system and method for determining a value of digital content represented as an NFT based at least in part on one or more of a digital content creator clout value, a digital content popularity value, and a digital content exclusivity value. These values may be adjusted, weighted, aggregated and/or normalized to determine a dynamically and objectively assessed value of digital content represented as an NFT.

In one example, the digital content includes business artifacts, wherein business artifacts include digital representations of any content generated as part of running a business. For example, business artifacts may include one or more of presentation materials, contact lists, sales collateral, supplier lists, speech transcripts, investor blueprints, strategic roadmaps, product roadmaps, marketing brochures or other marketing materials, sales strategies, webinar materials, investor sales pitches, product designs, technical articles, user manuals, emails, meeting minutes, call center analytics data, audio and/or video training materials, or any other business-related information.

In other examples, the digital content includes any information capable of being represented in digital form (such as audio, video, images, etc.).

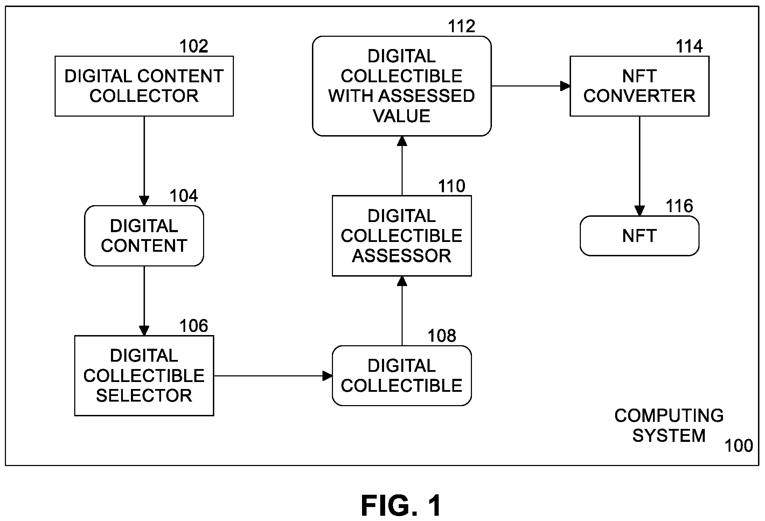

Figure 1 is a diagram of a computing system 100 for determining a value of an NFT according to some embodiments. Computing system 100 includes a digital content collector 102 to accumulate digital content from any accessible source. For example, digital content collector 102 may obtain digital content 104 from any locally or remotely accessible memory or storage devices (e.g., over a local network, over the Internet, within computing system 100, within a cloud computing environment, etc.). Since the volume of digital content 104 may be large and may include content not intended to become part of an NFT, digital collectible selector 106 filters digital content 104 to select only digital content that a supervising entity (such as a business manager, a systems administrator, etc.) desires to generate as a digital collectible 108. Digital collectible 108 is the digital object (e.g., a computer file including digital content 104) to be converted into an NFT that may be sold or licensed in a digital marketplace. Digital collectible 108 may be in any format. Digital collectible selector 106 may use any criteria in performing the selection. The criteria may be predefined by the supervising entity or may be dynamically adjusted by computing system 100 over time. The criteria may include filters for one or more of digital content creator, time span, creation date(s), content subject matter, category, type, or subtype, size, duration, location, position, or any characteristic of the digital content.

Digital collectible assessor 110 analyzes information relevant to digital collectible 108 (e.g., metadata) and the creator(s) of the digital content 104 represented by the digital collectible to automatically, dynamically and objectively assess a value of the digital collectible based on a plurality of factors. The resulting digital collectible with the assessed value 112 is input to NFT converter 114 to produce NFT 116 (which is a representation of the digital collectible 108). NFT converter 114 produces NFT 116 according to any existing method of NFT generation. NFT 116 may then be sold, traded or licensed to others and by others. In one example, the NFT is offered for sale in an online digital marketplace at the value determined by digital collectible assessor 110.

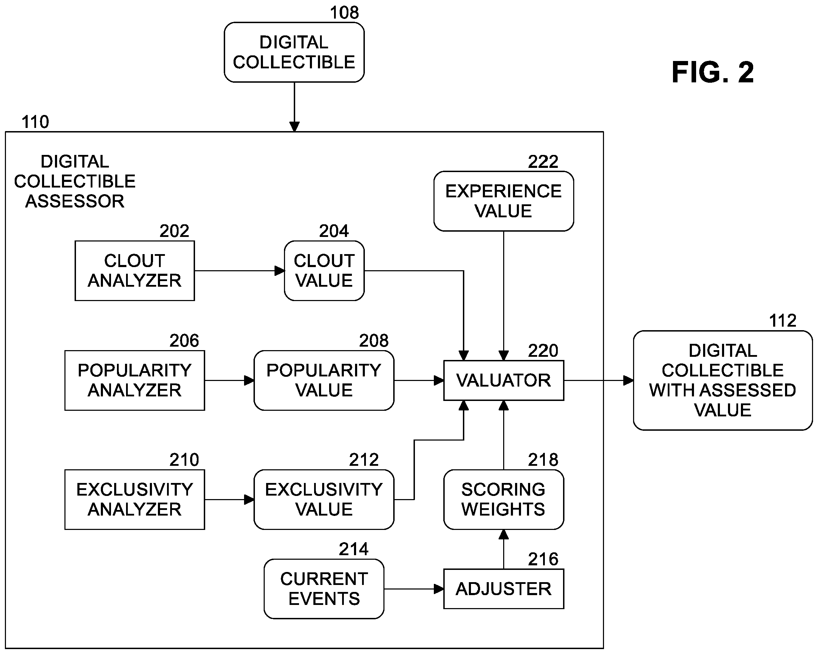

Figure 2 is a diagram of a digital collectible assessor 110 according to some embodiments. Clout analyzer 202 analyzes information relating to the creator(s) of digital collectible 108 to determine clout value 204. The creator is the person who created the digital content 104 represented by the digital collectible 108. For example, a creator may be an artist, a musician, a singer, a recording artist, a videographer, a photographer, an author, a public speaker, a salesperson, a marketing executive, a business executive, a manager, a researcher, an engineer, a scientist, an actor, a celebrity, etc. In at least one embodiment, clout value 204 is an aggregate measurement of a plurality of factors contributing to the creator's influence. The information for the factors may be obtained from any source. For example, sources may include any available information about the creator from the creator's publications, public and/or private databases, social media networks and applications (e.g., Facebook, Twitter, LinkedIn, Instagram, Snapchat, TikTok, Reddit, Slack, Teams, etc.), memberships, group affiliations, business organizations (groups, divisions, departments, etc.), news articles, technical journal articles, marketing materials, sales brochures, and so on. The information may be publicly available or accessed through account-based permission-based sharing methods. For example, factors may include the number of social media followers of the creator, the number and type of reactions by the creator to the creator's social media contributions/posts (e.g., likes, dislike, hearts, comments, emojis, etc.), responses to posts by others, whether related to the creator's posts or not (e.g., frequency of engagement based on the creator's posts or posts by others), shares, forwards, "re-tweets", on-line popularity of the creator, dedicated communities and chat rooms associated with the creator, verified status as a contributor, number of accounts followed, number of comments, number of views, and so on.

In an embodiment, the clout value 204 may be represented by a number, such as an integer. The clout value 204 changes over time based on the social media activity of the creator and others who interact with the creator on-line and/or offline presence or persona, including digital collectible 108. Various specific methods of determining the clout value 204 based on the information related to the creator are contemplated and embodiments are not restricted to any one method.

Popularity analyzer 206 analyzes information relating to digital collectible 108 to determine popularity value 208. In at least one embodiment, popularity value 208 is an aggregate measurement of a plurality of factors contributing to the popularity of digital collectible 108. The information for the factors may be obtained from any source. For example, sources may include any available information about digital collectible 108 from publications (e.g., traditional and online media outlets (radio, television, newspapers, magazines, newsletters, websites, blogs, videos, podcasts, etc.), public and/or private databases, social media networks and applications (e.g., Facebook, Twitter, LinkedIn, Instagram, Snapchat, TikTok, Reddit, Slack, Teams, etc.), memberships, group affiliations, business organizations (groups, divisions, departments, etc.), and so on. The information may be publicly available or accessed through account-based permission-based sharing methods. For example, factors may include the number of news stories about the digital collectible 108, topic(s) relating to the digital collectible, number of hits from search engine queries, web page analytics, posts in online message boards, posts in social media applications, threads, content proliferation (e.g., forwards, reshares), likes, sales, views, revenue generated, leads, bookings, references, presentations, emails, dialogues, or any other metric or method of measuring popularity.

In an embodiment, the popularity value 208 may be represented by a number, such as an integer. The popularity value 208 changes over time based on the factors being measured and/or analyzed, such as the social media activity of others who interact with the creator's digital collectible 108 and news about the digital collectible in the media, for example. Various specific methods of determining the popularity value 208 based on the information related to the activity of others are contemplated and embodiments are not restricted to any one method.

Exclusivity analyzer 210 analyzes information relating to digital collectible 108 to determine exclusivity value 212. In at least one embodiment, exclusivity value 212 is the number of copies of the NFT 116 to be made from the digital collectible.

Valuator 220 of digital collectible assessor 110 determines an assessed value of digital collectible 108 based at least in part on one or more of clout value 204, popularity value 208, exclusivity value 212, and scoring weights 218. Scoring weights 218 may attach a specific importance or lack thereof to one or more of the clout value, the popularity value, and the exclusivity value. For example, a set of weighted values using scoring weights 218 may be:

$$\{clout\ value * clout\ weight,\ popularity\ value * popularity\ weight,\ exclusivity\ value *$$
$$exclusivity\ weight\}$$

A scoring weight is an independent variable that accounts for the fame/popularity of the creator and the content's popularity. Weighting determines the contribution of the clout value, the popularity value, and/or the exclusivity value to the total valuation of the digital collectible. Weighting may be used to change the importance of one or more of the clout value, the popularity value and the exclusivity value in relation to the other values. For example, if the content creator is a very famous celebrity (e.g., Elon Musk, Adele, Barack Obama, LeBron James, etc.), the weight of the clout value in the overall value may be adjusted even higher than was objectively determined based on metrics. In an embodiment, scoring weights may be set by a system administrator. In an embodiment, each scoring weight is a number between 0 and 1. Weighting depends on real-world knowledge over and above objective measurements. Scoring weights 218 may be set to initial values and subsequently adjusted either manually or programmatically.

Adjuster 216 of digital collectible assessor 110 may optionally dynamically adjust one or more scoring weights 218 based on current events 214. Current events 214 may include any information obtained from any source that is relevant to the content creator and/or the digital collectible 108 that may positively or negatively affect the clout value 204, popularity value 208 and/or exclusivity value 212. In an embodiment, current events 214 are obtained in real-time from any source. For example, if the content creator is a famous celebrity who was recently involved in a scandal reported in the media (e.g., a car accident involving drunk driving, an allegation of an assault, etc.), then clout value 204 alone may have not yet changed sufficiently to reflect that incident, but the current valuation of the creator's digital collectible 108 is negatively affected. In this case, a system administrator or adjuster 215 may adjust the scoring weight downward for the clout value to reflect the current events. In another example, if the content creator just won the Nobel Prize for a scientific achievement, the valuation of the creator's digital collectible should rise, and the scoring weight for the clout value may be adjusted upward.

In an embodiment, determination of clout value 204, popularity value 208, exclusivity value 212, and/or scoring weights 218 may be performed in parallel.

In one embodiment, an additional experience value 222 may be applied by valuator 220 to reflect whether the content creator has previously sold an NFT with an NFT marketplace. If yes, a positive experience value 222 (e.g., 1) may be included in the valuation determination. If not, a zero or negative experience value (e.g., 0) may be included in the valuation determination. In another embodiment, the number of previous sales may be represented as the experience value 222 (e.g., by specific number of NFT sales, or by sales plateaus or groups of sales). For example, if the creator has sold over 10 NFTs in the past, then an appropriate positive experience value 222 may be used. This may be useful to establish the authenticity of the creator. If this is the first time the creator is generating a digital collectible, the value of the NFT will probably be less (since in the real world it has been observed that at least some first-time NFT creators are attempting fraud relating to the NFT).

In an embodiment, an aggregate weighted value (AWV) may be represented as:

$$AWV = ((\text{clout value} * \text{clout weight} + \text{experience value}) + (\text{popularity value} * \text{popularity weight}) + (\text{exclusivity value} * \text{exclusivity weight}))$$

The aggregate weighted value may be normalized to allow for comparison to values determined for other digital collectibles on a common scale. In an embodiment, the aggregate weighted value is normalized to a value between 0 and 1. The normalized value may then be converted to a scale utilizing a currency value (either digital currency (e.g., Bitcoins, Ether, etc.) or regular currency (e.g., United States Dollars (USD), Euros, etc.)).

For example, let's assume Tesla acts as the creator of a fictitious NFT. In one scenario, the creator is Elon Musk and the digital collectible is one or more of his town hall quotes. The collection of these various quotes may have been obtained from inaugural research and development (R&D) meetings and preserved internally by the corporate sales department and/or employees. If Tesla wants to monetize these quotes as NFTs, the collection of various quotes may be input as digital content 104 into computing system 100. For example, if Elon Musk gave keynote talks at the opening of the first Gigafactory in Nevada, Tesla might decide to monetize these quotes at the Gigafactory opening as NFTs. This digital content 104 (or exemplary business artifact) can be converted to an NFT 116, then sold via a third-party using an NFT marketplace.

The valuation of the NFT may be determined using digital collectible assessor 110 as described above. In this scenario, digital collectible 108 includes one or more Elon Musk keynote speech quotes, and the assessed value may be, for example, equal to ((variable 1 * weight 1) + (variable 2 * weight 2) + (variable 3 * weight 3) + (variable 4 * weight 4) + (variable 5 * weight 5) + (variable 6 * weight 6) + ...).

In an embodiment, clout value 204 may be divided into many (possibly limitless) variables. For example, variable 1 factor may be as shown in Table 1.

Table 1

| Rules | Variable 1 value |
| --- | --- |
| 0-10k followers | 1 |
| 10k+1 - 20k followers | 2 |
| 20k+1 - 30k followers | 3 |
| ... | ... |
| 500K+1 - 1M followers | 8 |
| 1M+1 - 2M followers | 9 |
| 2M+1 - 10M followers | 10 |
| >10M followers | 15 |

In an embodiment, digital collectible assessor 110 may implement more advanced rules as well. For example, for digital content from Tesla let's assume variable 1 has a value of 8, but weight 1 = 0.7 (assuming the weight values are between 0 and 1). In this example, a weight 1 value of "0.7" is given based on competitive market intelligence. The community of stakeholders who are adjusting factors affecting the NFT valuation may determine that this attribute of clout value is a more important factor than other factors when evaluating the overall value of the NFT, therefore the weight may be adjusted. Thus, in this example, the clout value 204 may be (8 * 0.7) = 5.6. In an embodiment, the community of stakeholders may include business decision makers (e.g., product management or executive management).

In similar fashion, additional attributes of clout value 248 may be determined by a variable 2 rule as shown in Table 2.

Table 2:

| Likes on creator's content | Variable 2 value |
| --- | --- |
| 0 - 1,000 likes | 1 |
| 1,001 - 10,000 likes | 2 |
| 10,001+ likes | 3 |

For Elon Musk as the creator, let's say variable 2 has a value of 2 and the weight 2 value is 0.65 (for weight values between 0 and 1). The weight 2 value of "0.65" may be the value given due to competitor analysis or market intelligence. NFT stakeholders may determine that this attribute of clout value is a more important factor than other factors in evaluating the overall value of the NFT. Thus, the aggregated clout value may now be (5.6 + (2 * 0.65)) = 6.9.

In similar fashion, popularity value 208, exclusivity value 212 and experience value 222 may be determined using a plurality of variables and corresponding weights.

For a digital collectible file or transcript of an event (e.g., a keynote speech or a press event), assume variable 3 is for an attribute of popularity value 208 and has a value of 3 and weight 3 is 0.9 (for weight values between 0 and 1), the defined rules for variable 3 (e.g., an attribute of popularity value 208) could be as shown in Table 3. Thus, popularity value for this attribute may be (3 * 0.9) = 2.7.

Table 3

| Google search metrics | Variable 3 value |
| --- | --- |
| 0- 25K searches | 1 |
| 25K+1 - 50K searches | 2 |
| 50K+ searches | 3 |

Similarly, assume variable 4 is for another attribute of popularity value 208 and has a value of 3 and weight 3 is 0.7 (for weight values between 0 and 1), the defined rules for variable 4 (e.g., another attribute of popularity value 208) could be as shown in Table 4. Thus, aggregated popularity value for this attribute may now be (2.7 + (3 * 0.7)) = 4.8.

Table 4

| Responses to creator's posts on a related topic (keynote speech) | Variable 4 value |
|---|---|
| 0 - 1K responses | 1 |
| 1K+1 - 5K responses | 2 |
| 5K+ response | 3 |

Similarly, assume variable 5 is for yet another attribute of popularity value 208 and has a value of 2 and weight 3 is 0.5 (for weight values between 0 and 1), the defined rules for variable 5 (e.g., yet another attribute of popularity value 208) could be as shown in Table 5. Thus, aggregated popularity value for this attribute may now be (4.8 + (2 * 0.5)) = 5.8.

Table 5

| Average responses to creator's posts | Variable 5 value |
|---|---|
| 0-1K responses | 1 |
| 1K+1 - 5K responses | 2 |
| 5K+ responses | 3 |

In an embodiment, the exclusivity value 212 may be added to the NFT value computation. For example, if only one copy if the NFT is to be made (the exclusivity value is 1), then the exclusivity weight may be set to 1. However, if more than one copy is to be made (for example, 10 copies), the exclusivity weight may be set to a different, lower value (for example, 0.5). In another embodiment, the exclusivity value my be omitted.

In an embodiment, an additional experience value 222 NFT denotes prior NFT-sales related experience of the content creator in an NFT marketplace. The NFT marketplace business requires specialized knowledge, therefore more experienced creators may attract more NFT seekers since they may have a significant following. The statistical likelihood that the NFT sells with an experienced NFT vendor is greater compared to new creators. Also, past activity within the NFT marketplace may be valued because this activity establishes the authenticity and the skills of the creator. This NFT experience can be represented in the valuation computation since the NFT experience affects the value of the NFT and perhaps the exclusivity (i.e., getting the NFT is harder because more people want the NFT from this vendor).

In an example, experience value 222 may be constructed as shown in table 6.

Table 6

| NFT sold previously | Experience value |
|---|---|
| 0 NFTs sold | 0 |
| 1 or more NFTs sold | 1 |

For this example, the aggregated value may be equal to clout value 204 of 6.9 + popularity value 208 of 5.8 + experience value 222 of 1.0 = 13.7. Let's assume only one copy of the NFT is made. Thus, adding in the exclusivity value, the aggregated value may be 14.7.

For normalization, any known scaler may be applied to normalize the aggregate value. For example:

$$\text{Normalization step -> new-factor1} = [\text{factor1} - (\text{mean of factors})] / (\text{standard deviation of factors})$$

$$\text{new-factor2} = [\text{factor2} - (\text{mean of factors})] / (\text{standard deviation of factors})$$

and so on... All factors may be converted into corresponding new-factors so the output values are represented more flexibly by eliminating redundancy and inconsistent dependency. Thus, the normalized aggregated value = new-factor1 + new-factor2 + ... NFT score. The normalization steps allow for comparing the relative value of the NFTs. For example, the NFT with a normalized aggregated value of 0.9 has a higher value than a NFT with normalized aggregated value of 0.7. To scale these values to USD or any fiat currency and/or cryptocurrency, the normalized aggregated value may be multiplied by an average standard NFT value. For this simple example, assume the normalized aggregated value was 0.8 and the average NFT value in USD corresponds to a reference index of valuations, such as $100,000 USD. Thus, the assessed value of the digital collectible 108 would be (0.8) * (100,000) = $80,000 USD.

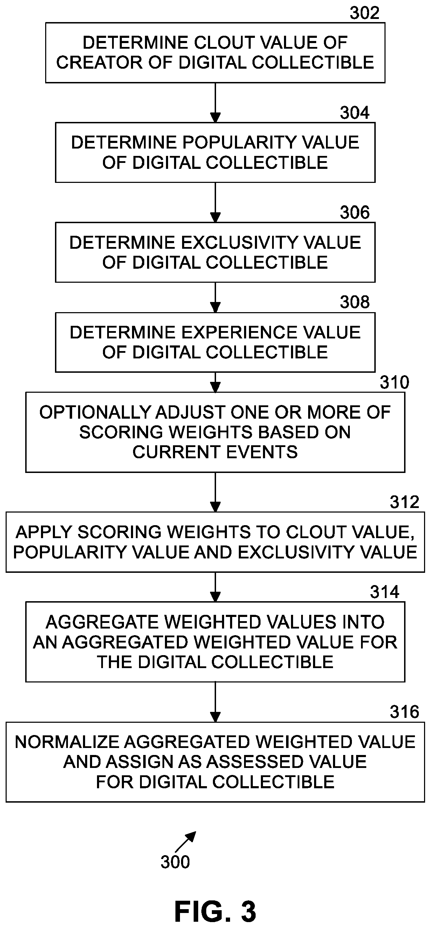

Figure 3 is a flow diagram of NFT valuation processing according to some embodiments. In an embodiment, Figure 3 illustrates actions taken by digital collectible assessor 110 to automatically, dynamically and objectively determine a value for digital collectible 108.

At block 302, clout analyzer 202 of digital collectible assessor 110 determines a clout value of the creator of digital collectible 108. At block 304, popularity analyzer 206 of digital collectible assessor 110 determines a popularity value of digital collectible 108. At block 306, exclusivity analyzer 210 of digital collectible assessor 110 determines an exclusivity value of digital collectible 108. At block 308, digital collectible assessor 110 determines an experience value for digital collectible 108. At block 310, adjuster 216 of digital collectible assessor 110 may optionally adjust one or more of the scoring weights 218 based on current events 214. At block 312, valuator 220 of digital collectible assessor 110 applies one or more scoring weights 218 to one or more of the clout value 204, the popularity value 208, and/or the exclusivity value 212. At block 314, valuator 220 of digital collectible assessor 110 aggregates the weighted values for clout, popularity, and exclusivity into an aggregated weighted value for digital collectible 108. At block 316, valuator 220 of digital collectible assessor 110 normalizes the aggregated weighted value and assigns the normalized value as the digital collectible with assessed value 112. Digital collectible with assessed value 112 may then be converted into an NFT 116.

In some embodiments, any one or more of blocks 302, 304, 306, 308, 310, and 312 may be performed or omitted for determining a value of any digital collectible.

In the detailed description, reference is made to the accompanying drawings that form a part hereof, and in which is shown by way of illustration specific examples that may be practiced. These examples are described in sufficient detail to enable one skilled in the art to practice the subject matter, and it is to be understood that other examples may be utilized and that logical, mechanical, electrical and/or other changes may be made without departing from the scope of the subject matter of this disclosure. The detailed description is, therefore, provided to describe example implementations and not to be taken as limiting on the scope of the subject matter described in this disclosure. Certain features from different aspects of the description may be combined to form yet new aspects of the subject matter discussed below.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real-world imperfections.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

While an example manner of implementing the computing system 100 of Figure 1 is illustrated herein, one or more of the elements, processes, and/or devices illustrated in Figures 1-3 may be combined, divided, re-arranged, omitted, eliminated, and/or implemented in any other way. Further, the example computing system 100 circuitry may be implemented by hardware, software, firmware, and/or any combination of hardware, software, and/or firmware. Thus, for example, any of the example computing system 100 circuitry could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). When reading any of the apparatus or system claims of this patent to cover a purely software and/or firmware implementation, at least one of the example computing system circuitry is/are hereby expressly defined to include a non-transitory computer readable storage device or storage disk such as a memory, a digital versatile disk (DVD), a compact disk (CD), a Blu-ray disk, etc., including the software and/or firmware. Further still, the example computing system of Figure 1 may include one or more elements, processes, and/or devices in addition to, or instead of, those illustrated in Figure 1, and/or may include more than one of any or all of the illustrated elements, processes and devices.

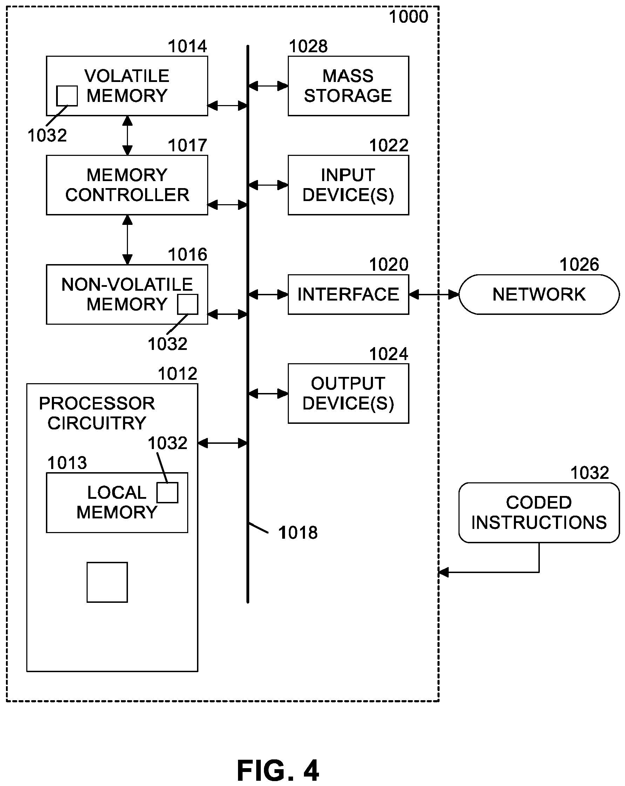

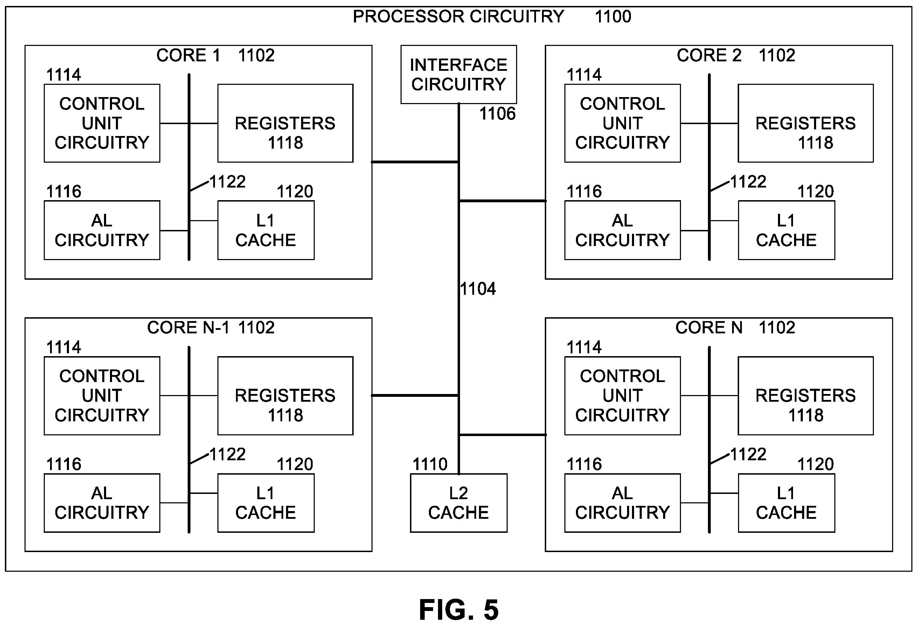

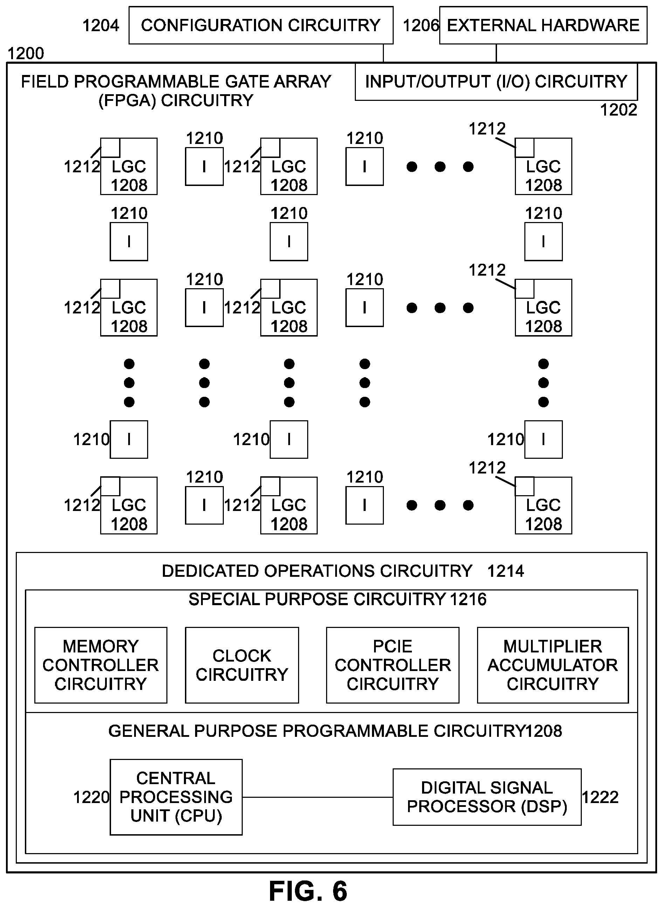

A flow chart representative of example hardware logic circuitry, machine readable instructions, hardware implemented state machines, and/or any combination thereof for implementing the computing system 100 of Figures 1 and 2 is shown in Figure 3. The machine readable instructions may be one or more executable programs or portion(s) of an executable program for execution by processor circuitry, such as the processor circuitry 812 shown in the example processor platform 800 discussed below in connection with Figure 4 and/or the example processor circuitry discussed below in connection with Figures 5 and/or 6. The program may be embodied in software stored on one or more non-transitory computer readable storage media such as a CD, a floppy disk, a hard disk drive (HDD), a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowchart illustrated in Figure 3, many other methods of implementing the example computing system 100 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine-readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine-readable instructions may be fragmented and stored on one or more storage devices and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine-readable instructions may be stored in a state in which they may be read by processor circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine readable media, as used herein, may include machine readable instructions and/or program(s) regardless of the particular format or state of the machine-readable instructions and/or program(s) when stored or otherwise at rest or in transit.

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of Figure 3 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 4 is a block diagram of an example processor platform 1000 structured to execute and/or instantiate the machine-readable instructions and/or operations of Figure 3 to implement the apparatus of Figures 1-2. The processor platform 1000 can be, for example, a SOC, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 1000 of the illustrated example includes processor circuitry 1012. The processor circuitry 1012 of the illustrated example is hardware. For example, the processor circuitry 1012 can be implemented by one or more integrated circuits, logic circuits, FPGAs microprocessors, CPUs, GPUs, DSPs, and/or microcontrollers from any desired family or manufacturer. The processor circuitry 1012 may be implemented by one or more semiconductor based (e.g., silicon based) devices.

The processor circuitry 1012 of the illustrated example includes a local memory 1013 (e.g., a cache, registers, etc.). The processor circuitry 1012 of the illustrated example is in communication with a main memory including a volatile memory 1014 and a non-volatile memory 1016 by a bus 1018. The volatile memory 1014 may be implemented by Synchronous Dynamic Random-Access Memory (SDRAM), Dynamic Random-Access Memory (DRAM), RAMBUS® Dynamic Random-Access Memory (RDRAM®), and/or any other type of RAM device. The non-volatile memory 1016 may be implemented by flash memory and/or any other desired type of memory device. Access to the volatile memory 1014 and/or non-volatile 1016 of the illustrated example is controlled by a memory controller 1017.

The processor platform 1000 of the illustrated example also includes interface circuitry 1020. The interface circuitry 1020 may be implemented by hardware in accordance with any type of interface standard, such as an Ethernet interface, a universal serial bus (USB) interface, a Bluetooth® interface, a near field communication (NFC) interface, a PCI interface, and/or a PCIe interface.

In the illustrated example, one or more input devices 1022 are connected to the interface circuitry 1020. The input device(s) 1022 permit(s) a user to enter data and/or commands into the processor circuitry 1012. The input device(s) 1022 can be implemented by, for example, an audio sensor, a microphone, a camera (still or video), a keyboard, a button, a mouse, a touchscreen, a trackpad, a trackball, an iso-point device, and/or a voice recognition system.

One or more output devices 1024 are also connected to the interface circuitry 1020 of the illustrated example. The output devices 1024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1020 of the illustrated example, thus, typically includes a graphics driver card, a graphics driver chip, and/or graphics processor circuitry such as a GPU.

The interface circuitry 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1026. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1000 of the illustrated example also includes one or more mass storage devices 1028 to store software and/or data. Examples of such mass storage devices 10210 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine-readable instructions 1032 may be stored in the mass storage device 1028, in the volatile memory 1014, in the non-volatile memory 1016, and/or on a removable non-transitory computer readable storage medium such as a CD or DVD.

Figure 5 is a block diagram of an example implementation of the processor circuitry 1012 of Figure 4. In this example, the processor circuitry 1012 of Figure 4 is implemented by processor circuitry 1100 (e.g., a microprocessor). For example, the processor circuitry 1100 may implement multi-core hardware circuitry such as a CPU, a DSP, a GPU, an XPU, etc. Although it may include any number of example cores 1102 (e.g., 1 core), the processor circuitry 1100 of this example is a multi-core semiconductor device including N cores. The cores 1102 of the processor circuitry 1100 may operate independently or may cooperate to execute machine readable instructions. For example, machine code corresponding to a firmware program, an embedded software program, or a software program may be executed by one of the cores 1102 or may be executed by multiple ones of the cores 1102 at the same or different times. In some examples, the machine code corresponding to the firmware program, the embedded software program, or the software program is split into threads and executed in parallel by two or more of the cores 1102. The software program may correspond to a portion or all the machine-readable instructions and/or operations represented by the flowchart of Figure 3.

The cores 1102 may communicate by an example bus 1104. In some examples, the bus 1104 may implement a communication bus to effectuate communication associated with one(s) of the cores 1102. For example, the bus 1104 may implement at least one of an Inter-Integrated Circuit (I2C) bus, a Serial Peripheral Interface (SPI) bus, a PCI bus, or a PCIe bus. Additionally or alternatively, the bus 1104 may implement any other type of computing or electrical bus. The cores 1102 may obtain data, instructions, and/or signals from one or more external devices by example interface circuitry 1106. The cores 1102 may output data, instructions, and/or signals to the one or more external devices by the interface circuitry 1106. Although the cores 1102 of this example include example local memory (e.g., Level 1 (L1) cache 1120 that may be split into an L1 data cache and an L1 instruction cache), the processor circuitry 1100 also includes example shared memory 1110 that may be shared by the cores (e.g., Level 2 (L2_ cache)) for high-speed access to data and/or instructions. Data and/or instructions may be transferred (e.g., shared) by writing to and/or reading from the shared memory 1110. The local memory of each of the cores 1102 and the shared memory 1110 may be part of a hierarchy of storage devices including multiple levels of cache memory and the main memory (e.g., the main memory 1014, 1016 of Figure 4). Typically, higher levels of memory in the hierarchy exhibit lower access time and have smaller storage capacity than lower levels of memory. Changes in the various levels of the cache hierarchy are managed (e.g., coordinated) by a cache coherency policy.

One or more of the cores 1102 may be referred to as a CPU, DSP, GPU, etc., or any other type of hardware circuitry. Cores 1102 include control unit circuitry 1114, arithmetic and logic (AL) circuitry (sometimes referred to as an ALU) 1116, a plurality of registers 1118, the L1 cache 1120, and an example bus 1122. Other structures may be present. For example, each core 1102 may include vector unit circuitry, single instruction multiple data (SIMD) unit circuitry, load/store unit (LSU) circuitry, branch/jump unit circuitry, floating-point unit (FPU) circuitry, etc. The control unit circuitry 1114 includes semiconductor-based circuits structured to control (e.g., coordinate) data movement within the corresponding core 1102. The AL circuitry 1116 includes semiconductor-based circuits structured to perform one or more mathematic and/or logic operations on the data within the corresponding core 1102. The AL circuitry 1116 of some examples performs integer-based operations. In other examples, the AL circuitry 1116 also performs floating point operations. In yet other examples, the AL circuitry 1116 may include first AL circuitry that performs integer-based operations and second AL circuitry that performs floating point operations. In some examples, the AL circuitry 1116 may be referred to as an Arithmetic Logic Unit (ALU). The registers 1118 are semiconductor-based structures to store data and/or instructions such as results of one or more of the operations performed by the AL circuitry 1116 of the corresponding core 1102. For example, the registers 1118 may include vector register(s), SIMD register(s), general purpose register(s), flag register(s), segment register(s), machine specific register(s), instruction pointer register(s), control register(s), debug register(s), memory management register(s), machine check register(s), etc. The registers 1118 may be arranged in a bank as shown in Figure 6. Alternatively, the registers 1118 may be organized in any other arrangement, format, or structure including distributed throughout the core 1102 to shorten access time. The bus 1122 may implement at least one of an I2C bus, a SPI bus, a PCI bus, or a PCIe bus.

Cores 1102 and/or, more generally, the processor circuitry 1100 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The processor circuitry 1100 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general-purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

Figure 6 is a block diagram of another example implementation of the processor circuitry 1012 of Figure 4. In this example, the processor circuitry 1012 is implemented by FPGA circuitry 1200. The FPGA circuitry 1200 can be used, for example, to perform operations that could otherwise be performed by the example processor circuitry 1100 of Figure 5 executing corresponding machine-readable instructions. However, once configured, the FPGA circuitry 1200 instantiates the machine-readable instructions in hardware and, thus, can often execute the operations faster than they could be performed by a general-purpose microprocessor executing the corresponding software.

More specifically, in contrast to the processor circuitry 1100 of Figure 5 described above (which is a general purpose device that may be programmed to execute some or all of the machine readable instructions represented by the flowchart of Figure 3 but whose interconnections and logic circuitry are fixed once fabricated), the FPGA circuitry 1200 of the example of Figure 6 includes interconnections and logic circuitry that may be configured and/or interconnected in different ways after fabrication to instantiate, for example, some or all of the machine readable instructions represented by the flowchart of Figure 3. In particular, the FPGA circuitry 1200 may be thought of as an array of logic gates, interconnections, and switches. The switches can be programmed to change how the logic gates are interconnected by the interconnections, effectively forming one or more dedicated logic circuits (unless and until the FPGA circuitry 1200 is reprogrammed). The configured logic circuits enable the logic gates to cooperate in different ways to perform different operations on data received by input circuitry. Those operations may correspond to some or all of the software represented by the flowchart of Figure 3. As such, the FPGA circuitry 1200 may be structured to effectively instantiate some or all of the machine-readable instructions of the flowchart of Figure 3 as dedicated logic circuits to perform the operations corresponding to those software instructions in a dedicated manner analogous to an ASIC. Therefore, the FPGA circuitry 1200 may perform the operations corresponding to the some or all of the machine-readable instructions of Figure 3 faster than the general-purpose microprocessor can execute the same.

In the example of Figure 6, the FPGA circuitry 1200 is structured to be programmed (and/or reprogrammed one or more times) by an end user by a hardware description language (HDL) such as Verilog. The FPGA circuitry 1200 of Figure 6, includes example input/output (I/O) circuitry 1202 to obtain and/or output data to/from example configuration circuitry 1204 and/or external hardware (e.g., external hardware circuitry) 1206. For example, the configuration circuitry 1204 may implement interface circuitry that may obtain machine readable instructions to configure the FPGA circuitry 1200, or portion(s) thereof. In some such examples, the configuration circuitry 1204 may obtain the machine-readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1206 may implement the processor circuitry 1100 of Figure 5. The FPGA circuitry 1200 also includes an array of example logic gate circuitry 1208, a plurality of example configurable interconnections 1210, and example storage circuitry 1212. The logic gate circuitry 1208 and interconnections 1210 are configurable to instantiate one or more operations that may correspond to at least some of the machine-readable instructions of Figure 3 and/or other desired operations. The logic gate circuitry 1208 shown in Figure 6 is fabricated in groups or blocks. Each block includes semiconductor-based electrical structures that may be configured into logic circuits. In some examples, the electrical structures include logic gates (e.g., AND gates, OR gates, NOR gates, etc.) that provide basic building blocks for logic circuits. Electrically controllable switches (e.g., transistors) are present within each of the logic gate circuitry 1208 to enable configuration of the electrical structures and/or the logic gates to form circuits to perform desired operations. The logic gate circuitry 1208 may include other electrical structures such as look-up tables (LUTs), registers (e.g., flip-flops or latches), multiplexers, etc.

The interconnections 1210 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1208 to program desired logic circuits.

The storage circuitry 1212 of the illustrated example is structured to store result(s) of the one or more of the operations performed by corresponding logic gates. The storage circuitry 1212 may be implemented by registers or the like. In the illustrated example, the storage circuitry 1212 is distributed amongst the logic gate circuitry 1208 to facilitate access and increase execution speed.

The example FPGA circuitry 1200 of Figure 6 also includes example Dedicated Operations Circuitry 1214. In this example, the Dedicated Operations Circuitry 1214 includes special purpose circuitry 1216 that may be invoked to implement commonly used functions to avoid the need to program those functions in the field. Examples of such special purpose circuitry 1216 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1200 may also include example general purpose programmable circuitry 1218 such as an example CPU 1220 and/or an example DSP 1222. Other general purpose programmable circuitry 1218 may additionally or alternatively be present such as a GPU, an XPU, etc., that can be programmed to perform other operations.

Although Figures 5 and 6 illustrate two example implementations of the processor circuitry 1012 of Figure 4, many other approaches are contemplated. For example, as mentioned above, modern FPGA circuitry may include an on-board CPU, such as one or more of the example CPU 1220 of Figure 6. Therefore, the processor circuitry 1012 of Figure 4 may additionally be implemented by combining the example processor circuitry 1100 of Figure 4 and the example FPGA circuitry 1200 of Figure 6. In some such hybrid examples, a first portion of the machine-readable instructions represented by the flowchart of Figure 3 may be executed by one or more of the cores 1102 of Figure 5 and a second portion of the machine-readable instructions represented by the flowchart of Figure 3 may be executed by the FPGA circuitry 1200 of Figure 6.

In some examples, the processor circuitry 1012 of Figure 4 may be in one or more packages. For example, the processor circuitry 1100 of Figure 5 and/or the FPGA circuitry 1200 of Figure 6 may be in one or more packages. In some examples, an XPU may be implemented by the processor circuitry 1012 of Figure 4, which may be in one or more packages. For example, the XPU may include a CPU in one package, a DSP in another package, a GPU in yet another package, and an FPGA in still yet another package.

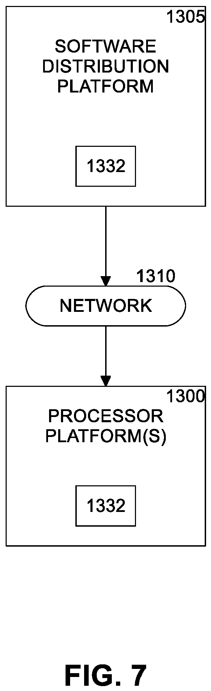

A block diagram illustrating an example software distribution platform 1305 to distribute software such as the example machine-readable instructions 1032 of Figure 4 to hardware devices owned and/or operated by third parties is illustrated in Figure 7. The example software distribution platform 1305 may be implemented by any computer server, data facility, cloud service, etc., capable of storing and transmitting software to other computing devices. The third parties may be customers of the entity owning and/or operating the software distribution platform 1305. For example, the entity that owns and/or operates the software distribution platform 1305 may be a developer, a seller, and/or a licensor of software such as the example machine-readable instructions 1032 of Figure 4. The third parties may be consumers, users, retailers, OEMs, etc., who purchase and/or license the software for use and/or re-sale and/or sub-licensing. In the illustrated example, the software distribution platform 1305 includes one or more servers and one or more storage devices. The storage devices store the machine-readable instructions 1032, which may correspond to the example machine readable instructions of Figure 3, as described above. The one or more servers of the example software distribution platform 1305 are in communication with a network 1310, which may correspond to any one or more of the Internet and/or any of the example networks, etc., described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 1032 from the software distribution platform 1305. For example, the software, which may correspond to the example machine readable instructions of Figure 3, may be downloaded to the example processor platform 1000, which is to execute the machine-readable instructions 1032 to implement the methods of Figure 3 and associated computing system 100. In some examples, one or more servers of the software distribution platform 1305 periodically offer, transmit, and/or force updates to the software (e.g., the example machine-readable instructions 1032 of Figure 4) to ensure improvements, patches, updates, etc., are distributed and applied to the software at the end user devices.

In some examples, an apparatus includes means for processing an operating state of an endpoint device circuitry based on operating data of the endpoint device circuitry to evaluate suitability of the endpoint device circuitry for an update. For example, the means for processing may be implemented by processor circuitry, processor circuitry, firmware circuitry, etc. In some examples, the processor circuitry may be implemented by machine executable instructions such as that implemented by at least blocks of Figures 1-3 executed by processor circuitry, which may be implemented by the example processor circuitry 1012 of Figure 4, the example processor circuitry 1100 of Figure 5, and/or the example Field Programmable Gate Array (FPGA) circuitry 1200 of Figure 6. In other examples, the processor circuitry is implemented by other hardware logic circuitry, hardware implemented state machines, and/or any other combination of hardware, software, and/or firmware. For example, the processor circuitry may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

In some examples, an apparatus includes means for determining a value of an NFT. For example, the means for determining may be implemented by circuitry, etc. In some examples, the circuitry may be implemented by machine executable instructions such as that implemented by at least blocks of Figure 3 executed by processor circuitry, which may be implemented by the example processor circuitry 1012 of Figure 4, the example processor circuitry 1100 of Figure 5, and/or the example Field Programmable Gate Array (FPGA) circuitry 1200 of Figure 6, executing in conjunction with memory 1014 and 1016. In other examples, the circuitry is implemented by other hardware logic circuitry, hardware implemented state machines, and/or any other combination of hardware, software, and/or firmware. For example, the circuitry may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

From the foregoing, it will be appreciated that example systems, methods, apparatus, and articles of manufacture have been disclosed to improve determining a value for an NFT. The disclosed systems, methods, apparatus, and articles of manufacture improve the efficiency of using a computing device to assess a value of an NFT. The disclosed systems, methods, apparatus, and articles of manufacture are accordingly directed to one or more improvement(s) in the operation of a machine such as a computer or other electronic and/or mechanical device.

Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the examples of this patent.

## Claims

1. An apparatus comprising:

   a clout analyzer to determine a clout value for a creator of a digital collectible;
   a popularity analyzer to determine a popularity value of the digital collectible; and
   a valuator to aggregate the clout value and the popularity value into an aggregated value for the digital collectible, to normalize the aggregated value and assign the normalized aggregated value as an assessed value for the digital collectible.

2. The apparatus of claim 1, comprising a converter to convert the digital collectible into a non-fungible token (NFT) having the assessed value.

3. The apparatus of claim 1 or claim 2, comprising an exclusivity analyzer to determine an exclusivity value for the digital collectible, wherein the valuator is to aggregate the exclusivity value with the clout value and the popularity value and optionally wherein the exclusivity value is a number of copies of a non-fungible token (NFT) to be generated from the digital collectible.

4. The apparatus of any preceding claim, wherein the clout value comprises an aggregate measurement of a plurality of factors contributing to influence of the creator, the plurality of factors including a number of social media followers of the creator.

5. A method comprising:

   determining a clout value for a creator of a digital collectible;
   determining a popularity value of the digital collectible; and
   aggregating the clout value and the popularity value into an aggregated value for the digital collectible, normalizing the aggregated value and assigning the normalized aggregated value as an assessed value for the digital collectible.

6. The method of claim 5, comprising converting the digital collectible into a non-fungible token (NFT) having the assessed value.

7. The method of claim 5 or claim 6, comprising determining an exclusivity value for the digital collectible and aggregating the exclusivity value with the clout value and the popularity value.

8. The method of claim 7, wherein the exclusivity value is a number of copies of a non-fungible token (NFT) to be generated from the digital collectible.

9. The method of any of claims 5 to 8, wherein the clout value comprises an aggregate measurement of a plurality of factors contributing to influence of the creator, the plurality of factors including a number of social media followers of the creator.

10. The method of any of claims 5 to 9, wherein the clout value changes over time based on at least one of social media activity of the creator and others who interact with the creator.

11. The method of any of claims 5 to 10, wherein the popularity value comprises an aggregate measurement of a plurality of factors contributing to popularity of digital collectible, the plurality of factors including a number of social media likes of the digital collectible.

12. The method of any of claims 5 to 11, comprising aggregating an experience value of the creator with the clout value and the popularity value.

13. The method of any of claims 5 to 12, comprising applying one or more scoring weights to one or more of the clout value and the popularity value before aggregating the clout value and the popularity value.

14. The method of claim 13, comprising adjusting one or more of the scoring weights based at least in part on one or more current events.

15. At least one non-transitory machine-readable storage medium comprising instructions that, when executed, cause at least one processing device to at least perform the method of any of claims 5 to 14.

**FIG. 1**

FIG. 2

302
DETERMINE CLOUT VALUE OF
CREATOR OF DIGITAL COLLECTIBLE

304
DETERMINE POPULARITY VALUE
OF DIGITAL COLLECTIBLE

306
DETERMINE EXCLUSIVITY VALUE
OF DIGITAL COLLECTIBLE

308
DETERMINE EXPERIENCE VALUE
OF DIGITAL COLLECTIBLE

310
OPTIONALLY ADJUST ONE OR MORE OF
SCORING WEIGHTS BASED ON
CURRENT EVENTS

312
APPLY SCORING WEIGHTS TO CLOUT VALUE,
POPULARITY VALUE AND EXCLUSIVITY VALUE

314
AGGREGATE WEIGHTED VALUES INTO
AN AGGREGATED WEIGHTED VALUE FOR
THE DIGITAL COLLECTIBLE

316
NORMALIZE AGGREGATED WEIGHTED VALUE
AND ASSIGN AS ASSESSED VALUE
FOR DIGITAL COLLECTIBLE

300

# FIG. 3

**FIG. 4**

PROCESSOR CIRCUITRY 1100

CORE 1 1102

1114
CONTROL
UNIT
CIRCUITRY

REGISTERS
1118

1116
AL
CIRCUITRY

1122

1120
L1
CACHE

INTERFACE
CIRCUITRY

1106

1104

CORE 2 1102

1114
CONTROL
UNIT
CIRCUITRY

REGISTERS
1118

1116
AL
CIRCUITRY

1122

1120
L1
CACHE

CORE N-1 1102

1114
CONTROL
UNIT
CIRCUITRY

REGISTERS
1118

1116
AL
CIRCUITRY

1122

1120
L1
CACHE

1110
L2
CACHE

CORE N 1102

1114
CONTROL
UNIT
CIRCUITRY

REGISTERS
1118

1116
AL
CIRCUITRY

1122

1120
L1
CACHE

**FIG. 5**

EP 4 220 525 A1

1204 | CONFIGURATION CIRCUITRY | 1206 EXTERNAL HARDWARE

1200

FIELD PROGRAMMABLE GATE ARRAY (FPGA) CIRCUITRY | INPUT/OUTPUT (I/O) CIRCUITRY

1202

1212 — LGC 1208     1210 I     1212 LGC 1208     1210 I     ● ● ●     1212 LGC 1208

1210 I     1210 I     1210 I

1212 — LGC 1208     1210 I     1212 LGC 1208     1210 I     ● ● ●     1212 LGC 1208

1210 I     1210 I     1210 I

1212 — LGC 1208     1210 I     1212 LGC 1208     1210 I     ● ● ●     1212 LGC 1208

DEDICATED OPERATIONS CIRCUITRY   1214

SPECIAL PURPOSE CIRCUITRY 1216

| MEMORY CONTROLLER CIRCUITRY | CLOCK CIRCUITRY | PCIE CONTROLLER CIRCUITRY | MULTIPLIER ACCUMULATOR CIRCUITRY |

GENERAL PURPOSE PROGRAMMABLE CIRCUITRY1208

1220 CENTRAL PROCESSING UNIT (CPU)     DIGITAL SIGNAL PROCESSOR (DSP) 1222

**FIG. 6**

1305

SOFTWARE
DISTRIBUTION
PLATFORM

1332

1310

NETWORK

1300

PROCESSOR
PLATFORM(S)

1332

FIG. 7

Europäisches
Patentamt
European
Patent Office
Office européen
des brevets

# EUROPEAN SEARCH REPORT

Application Number

EP 23 15 0777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANUSREE SHARMA ET AL: ""It's A Blessing and A Curse": Unpacking Creators' Practices with Non-Fungible Tokens (NFTs) and Their Communities", ARXIV.ORG, CORNELL UNIVERSITY LIBRARY, 201 OLIN LIBRARY CORNELL UNIVERSITY ITHACA, NY 14853, 15 January 2022 (2022-01-15), XP091142500, * the whole document * | 1-15 | INV. G06Q30/0201 G06Q30/06 |

TECHNICAL FIELDS
SEARCHED     (IPC)

G06Q

The present search report has been drawn up for all claims

| Place of search | Date of completion of the search | Examiner |
|---|---|---|
| The Hague | 17 May 2023 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)